# EUROPEAN PATENT APPLICATION

(11) **EP 1 205 278 A1**
(43) Date of publication of application: **15.05.2002**
(21) Application number: 01127028.7
(22) Date of filing: 14.11.2001
(51) Int. Cl.: B23Q 11/12

(54) **Cooler for machine tool**

(30) Priority: 14.11.2000 JP 2000346821
(71) Applicant: ECOREG LTD., Osaka-shi, Osaka 531-0072 (JP)
(72) Inventor: Hara, Mitsugu, Kishiwada-shi, Osaka 596-0827 (JP)
(74) Representative: Frankland, Nigel Howard

(57) **Abstract**

A less expensive cooler for a machine tool comprises a main spindle (3), a housing (1) rotatably supporting the main spindle (3) via bearing (2), and a tube (11) wound around the housing (1) for passing a cooling mist therethrough.

## Description

### BACKGROUND OF THE INVENTION

### Field of the Invention

The present invention relates to a cooler for a machine tool,

### Description of the Art

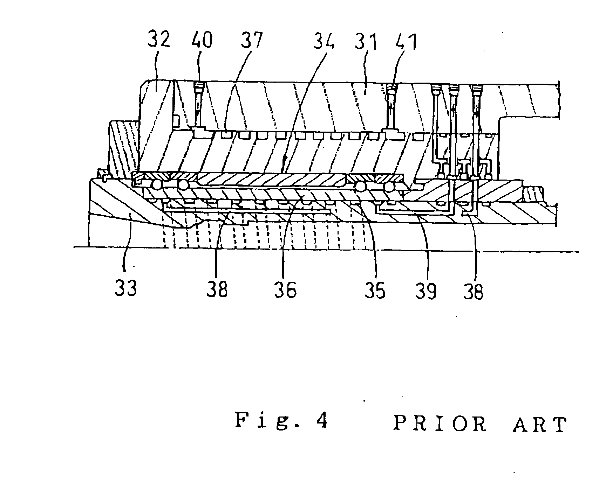

In conventional machine tools, a main spindle is rotatably supported by a housing via a bearing, so that heat generated by the rotation of the main spindle is conducted to the housing, Therefore, a cooler for cooling the housing is provided in such a machine tool. One example of such a cooler is the structure for cooling a spindle unit as shown in Fig. 4 which is disclosed in Japanese unexamined Patent Publication No. 6-31585 (1994). The spindle unit includes a housing 31, a spindle cylinder 32 fixed within the housing 31, and a main spindle 33 rotatably supported in the housing 31 via a bearing unit 34 and an upper bearing (not shown). The cooling structure of the spindle unit includes a cooling liquid channel defined between a helical groove 35 formed in an outer peripheral surface of the main spindle 33 and a bearing inner cylinder 36 of the bearing unit 34, and another cooling liquid channel defined between a helical groove 37 formed in an outer peripheral surface of the spindle cylinder 32 and the housing 31. In Fig. 4, the spindle unit further includes a cooling liquid supply path 38, a cooling liquid drain path 39, a cooling liquid inlet port 40 and a cooling liquid outlet port 41. In general, a cooling liquid is supplied to the respective cooling liquid channels by a cooling liquid supply unit which has an orifice for flow rate control, a sensor for temperature control and the like.

However, a cooling liquid supply unit specifically designed for supplying the cooling liquid to the cooling liquid channels in the spindle unit cooling structure is quite expensive, thereby making the machine tool itself more expensive.

In view of the foregoing, it is an object of the present invention to provide a less expensive cooler for a machine tool.

### SUMMARY OF THE INVENTION

In accordance with the present invention to achieve the aforesaid object, there is provided a cooler for a machine tool, which comprises a main spindle, a housing rotatably supporting the main spindle via a bearing, and a channel provided in association with the housing for passing a cooling mist therethrough.

In the inventive machine tool cooler having the main spindle and the housing rotatably supporting the main spindle via the bearing, the channel for passing the cooling mist therethrough is in association with the housing. Therefore, the housing can be cooled by passing the cooling mist through the channel in association with the housing and taking heat away from the housing by evaporation of the cooling mist. In addition, the cooling mist can easily be generated with the use of a cooling liquid supply unit and a compressed air supply unit, both typically included in the machine tool. More specifically, a tank containing a cooling liquid, a lubricating liquid or a mixture of the cooling liquid and the lubricating liquid for cooling or lubricating a tool, and a pump for supplying the cooling liquid or the like from the tank to a cooling liquid injection nozzle typically are provided in the machine tool as the cooling liquid supply unit. In addition, an air compressor for supplying compressed air to eject the cooling liquid or the like from the cooling liquid injection nozzle typically is provided in the machine tool as the compressed air supply unit. Therefore, the generation of the cooling mist can easily be achieved by mixing the cooling liquid supplied from the cooling liquid supply unit with the compressed air supplied from the compressed air supply unit so as to produce the cooling liquid in mist form. By thus employing the cooling liquid supply unit and the compressed air supply unit provided in the machine tool, the need for providing a relatively expensive cooling liquid supply unit specifically designed for the cooling of the housing can be obviated which thereby reduces the cost of the machine tool.

Where the channel comprises a tube helically wound around the housing in the inventive machine tool cooler, the channel can be formed from a less expensive tubular material.

Where the channel is provided within the housing in the subject machine tool cooler, the housing can be cooled from its interior with a more advantageous cooling effect.

### BRIEF DESCRIPTION OF THE DRAWINGS

Fig. 1 is a sectional view illustrating a machine tool cooler according to one embodiment of the present invention;
Fig. 2 is a sectional view illustrating a machine tool cooler according to another embodiment of the present invention;
Fig. 3 is a sectional view illustrating a machine tool cooler according to further another embodiment of the present invention; and
Fig. 4 is a sectional view illustrating a machine tool cooler according to the prior art.

### DETAILED DESCRIPTION OF THE PREFERRED EMBODIMENTS

Embodiments of the present invention will hereinafter be described in detail with reference to the attached drawings.

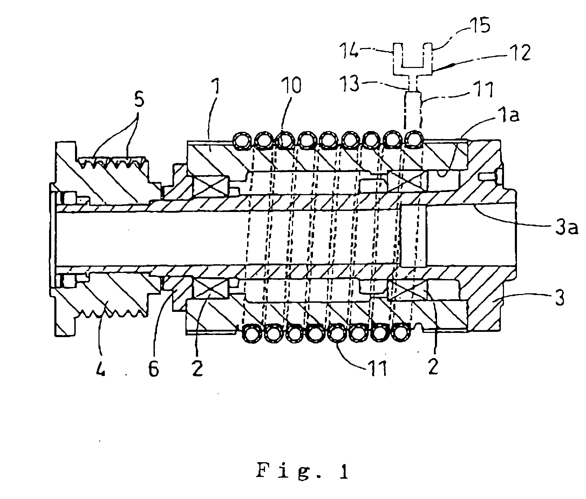

Fig. 1 is a sectional view illustrating a cooler for a machine tool in accordance with one embodiment of the present invention. In this embodiment, the machine tool is a numerically controlled (NC) lathe. In Fig. 1, a generally cylindrical housing 1 fixed to a headstock (not shown) has a center through-hole 1a, and a pair of bearings 2 are fixed to longitudinally opposite portions of the inner periphery of the center through-hole la. A generally cylindrical main spindle 3 within through-hole 1a is rotatably supported by the bearings 2. A chuck (not shown) is provided at one end (a right end in Fig. 1) of the main spindle 3. A pulley 4 is fixed around the other end portion (a left end portion in Fig. 1) of the main spindle 3, and is coupled to a rotation shaft (not shown) of a motor via a belt 5. A draw bar and the like (not shown) are provided in the center through-hole 3a of the main spindle 3. In Fig. 1, an annular fixture 6 is fitted around the main spindle 3.

The machine tool includes a cooling liquid supply unit (not shown) including a tank containing a cooling water (cooling liquid) such as tap water and a pump for supplying the cooling water from the tank to a cooling water injection nozzle (not shown). The machine tool further includes a compressed air supply unit (not shown) including an air compressor for supplying compressed air to the cooling water injection nozzle. During machining, the cooling water and the compressed air are supplied from the cooling liquid supply unit and the compressed air supply unit, respectively, to the cooling water injection nozzle, so that the cooling water from the cooling water injection nozzle is sprayed over a machining part (including a machining surface of the tool and a machined surface of a workpiece).

The housing 10 has a helical groove 10 formed in an outer peripheral surface thereof, and a tube 11 such as a flexible tube is helically wound around the housing 1 along the groove 10. One end of the tube 11 is connected to a bifurcated connection tube 12 (one example of mist generating means), and the other end of the tube is open to the atmosphere. The bifurcated connection tube 12 has a confluent portion 13 connected to the one end of the tube 11, and two branch portions 14, 15 branched from the confluent portion 13. The branch portions 14 is connected to the cooling liquid supply unit via a hose or the like, and the branch portion 15 is connected to the compressed air supply unit via a hose or the like.

When the cooling liquid supply unit and the compressed air supply unit are operated in the machining of a workpiece, cooling water is supplied from the cooling liquid supply unit to the cooling water injection nozzle and to the branch portion 14 of the bifurcated connection tube 12, and compressed air is supplied from the compressed air supply unit to the cooling water injection nozzle and to the branch portion 15 of the bifurcated connection tube. Then, the cooling water is sprayed over the machining part from the cooling water injection nozzle. On the other hand, the cooling water and the compressed air respectively supplied to the branch portions 14 and 15 merge and mix with each other in the confluent portion 13, so that the cooling water is disintegrated into minute water particles in a mist form. The resultant cooling mist flows into the tube 11 helically wound around the housing 1. The water particles of the mist evaporate while passing through the tube 11 to cool the housing 1, and discharge from the other end of the tube 11 into the atmosphere.

In this embodiment, the housing 1 is cooled by passing the cooling mist through the tube 11 helically wound around the housing 1 and withdrawing heat from the housing by the evaporation of the cooling mist. In addition, the cooling mist may be generated by employing the cooling liquid supply unit and the compressed air supply unit already provided in the machine tool. Although the tube 11 is required, the cooler is inexpensive since there is no need to provide a cooling mist supply unit specifically designed for the cooling of the housing. Further, tap water can be used as the cooling water and, hence, even if the cooling mist passed through the tube 11 is discharged from the other end of the tube 11 into the atmosphere, there is no adverse influence on the environment. Furthermore, the tube 11 has a simple construction with the other end thereof being open to the atmosphere.

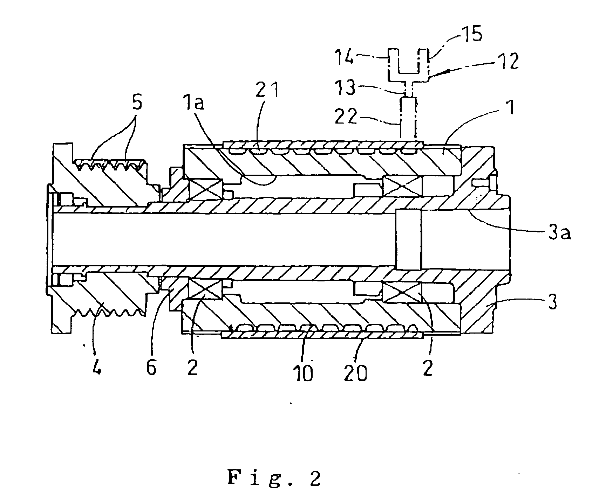

Fig. 2 is a sectional view illustrating a machine tool cooler according to another embodiment of the present invention. This embodiment differs from the embodiment shown in Fig. 1 in that the tube 11 is not wound around the housing 1 along the groove 10 formed in the outer peripheral surface of the housing 10, but rather a cylindrical body 20 is fitted around the housing 1 in a liquid tight manner so as to close the circumferential open side of the groove 10. Thus, a helical channel 21 is defined between the groove 10 and an inner peripheral surface of the cylindrical body 20. One end of the channel 21 is connected to a bifurcated connection tube (mist generating means) 12 via a hose 22, and the other end of the channel is open to the atmosphere. In this embodiment, other components are the same as in the embodiment of Fig. 1, and like components are denoted by like reference characters. This embodiment has similar functions and effects as the embodiment of Fig. 1.

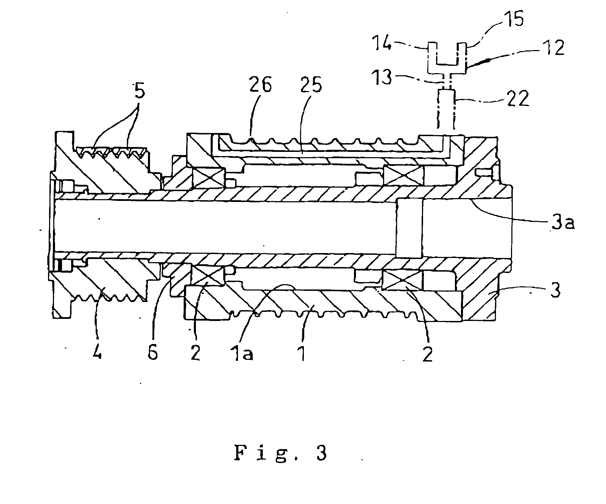

Fig. 3 is a sectional view illustrating a machine tool cooler according to a further embodiment of the present invention. This embodiment diffes from the embodiment shown in Fig. 1 in that a plurality of channels 25 (only one channel 25 is shown in Fig. 3) are within the housing 1. One end of each of the channels 25 is connected to a bifurcated connection tube (mist generating means) 12 and the other end of each of the channels 25 is open to the atmosphere. Therefore, the tube 11 is not wound around the housing 1 along the groove 10. In this embodiment, other components are the same as in the embodiment of Fig. 1, and like components are denoted by like reference characters. This embodiment has similar functions and effects as the embodiment of Fig. 1. However, the housing 1 can be cooled from its interior with a more advantageous cooling effect.

In the embodiments described above, the groove 10 is formed in the outer peripheral surface of the housing 1, but the formation of the groove 10 is not necessarily required. Further, any of various cooling liquids and lubricating liquids may be used alone or as a mixture instead of the cooling water in the aforesaid embodiments. In the embodiment shown in Fig. 3, the channels 25 may be helically formed in the housing 1.

Although the pulley 4 fixed around the other end portion of the outer periphery of the main spindle 3 is coupled to the rotation shaft of the motor via the belt 5 for driving the main spindle 3 in the embodiments described above, a motor incorporating the main spindle 3 may be employed to drive the main spindle.

The inventive machine tool cooler is applicable not only to a numerically controlled (NC) lathe, but also to any of various other machine tools such as machining centers and grinding machines.

In the machine tool cooler according to the present invention, the housing can be cooled by passing the cooling mist through the channel provided in association with the housing which removes heat from the housing by the evaporation of the cooling mist. In addition, the cooling mist can easily be generated with the use of a cooling liquid supply unit and a compressed air supply unit typically provided in the machine tool. More specifically, a tank containing a cooling liquid, a lubricating liquid or a mixture of the cooling liquid and the lubricating liquid for cooling or lubricating the tool and/or workpiece, and the pump for supplying the cooling liquid or the like from the tank to the cooling liquid injection nozzle typically are provided in the machine tool as the cooling liquid supply unit, and further an air compressor for supplying compressed air to eject the cooling liquid or the like from the cooling liquid injection nozzle typically is provided in the machine tool as the compressed air supply unit. Therefore, the generation of the cooling mist easily can be achieved by mixing the cooling liquid supplied from the cooling liquid supply unit with the compressed air supplied from the compressed air supply unit to produce the cooling liquid into a mist form. By thus employing the cooling liquid supply unit and the compressed air supply unit already provided in the machine tool, the need for providing a relatively expensive cooling liquid supply unit specifically designed for the cooling of the housing can be obviated thereby reducing the cost of the machine tool.

Where the channel comprises a tube helically wound around the housing in the inventive machine tool cooler, the channel can be formed from an inexpensive tubular material.

Where the channel is provided within the housing in the inventive machine tool cooler, the housing can be cooled from its interior with a more advantageous cooling effect.

In the present Specification "comprise" means "includes or consists of" and "comprising" means "including or consisting of'.

The features disclosed in the foregoing description, or the following Claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A cooler for a machine tool, comprising a main spindle, a housing rotatably supporting the main spindle via a bearing, and a channel provided in association with the housing for passing a cooling mist therethrough.

2. A cooler as set forth in claim 1, wherein the channel comprises a tube helically wound around the housing.

3. A cooler as set forth in claim 1, wherein the channel is provided within the housing.
